# EUROPÄISCHE PATENTSCHRIFT

(11) **EP 1 735 893 B1**
(45) Veröffentlichungstag und Bekanntmachung des Hinweises auf die Patenterteilung: **23.07.2008**
(21) Anmeldenummer: 05707522.8
(22) Anmeldetag: 18.02.2005
(51) Int. Cl.: H02K 5/06, H02K 11/04, H02K 7/102

(54) **ELEKTROMOTOR UND BAUREIHE VON ELEKTROMOTOREN**
ELECTRIC MOTOR AND RANGE OF ELECTRIC MOTORS
MOTEUR ELECTRIQUE ET GAMME DE FABRICATION DE MOTEURS ELECTRIQUES

(30) Priorität: 01.04.2004 DE 102004016781; 13.07.2004 DE 102004033745
(43) Veröffentlichungstag der Anmeldung: 27.12.2006
(60) Teilanmeldung: 08006736.6
(73) Patentinhaber: Sew-Eurodrive GmbH & Co. KG, 76646 Bruchsal (DE)
(72) Erfinder: SCHMIDT, Josef, 76676 Graben-Neudorf (DE); BECKER, Günter, 76684 Östringen (DE); PFANN, Jochen, 76189 Karlsruhe (DE); TRÖNDLE, Karl-Heinz, 76694 Forst (DE)
(86) Internationale Anmeldenummer: PCT/EP2005/001732
(87) Internationale Veröffentlichungsnummer: WO 2005/107042

(56) Entgegenhaltungen:
- EP-A- 0 456 169
- EP-A- 0 874 442
- GB-A- 989 720
- US-A- 4 988 905
- US-A- 5 360 322
- US-A- 5 532 533
- US-A- 2004 032 178
- US-A1- 2001 033 113
- US-B1- 6 229 232

## Beschreibung

Die Erfindung betrifft einen Elektromotor und eine Baureihe von Elektromotor.

Aus der DE 197 04 226 A1 ist ein Elektromotor bekannt, bei dem auf das Gehäuse des Stators ein Zwischenteil und ein Deckel aufgesetzt ist, wobei im Innenraum eine elektronische Schaltung mit Umrichterfunktionalität vorgesehen ist. Nachteilig ist dabei, dass der Umrichter mittels einer Wärmesperre zum Motor hin wärmeisoliert ist. Somit muss ein leistungsstarker Kühlkörper am Umrichter verbunden sein. Dieser Kühlkörper ist zum Motor hin am Umrichter vorgesehen und benötigt nachteiligerweise ein großes Bauvolumen. Außerdem ist er aufwendig und kostspielig zu fertigen. Insbesondere bei einer Ausführung mit Kühlfingern ist ein großer Aufwand verbunden.

Der Klemmenkasten, also Anschlusskasten, des Elektromotors ist nicht axial angeordnet sondern seitlich. Seitlich vom Motor ist aber bei manchen Anlagen wenig Bauraum vorhanden.

Aus der US 2001/033113 A1 ist ein Elektromotor bekannt, der eine erste mechanische Schnittstelle zum Verbinden mit einem Lagerschild aufweist, wobei das Lagerschild einen Sitz für ein B-seitiges Lager der Rotorwelle aufweist und gehäusebildend für eine Pumpe ist.

Aus der US-A-5 360 322 ist eine hydraulische Pumpe bekannt, die von einer Pumpe angetrieben ist.

Aus der US-A-4 988 905 ist ein bürstenloser Motor bekannt, bei dem ein Winkelsensor integriert ist.

Aus der US 20040032178 ist ein Baukasten von Motoren bekannt, bei denen B-seitig verschiedene Zubehör-Vorrichtungen verbindbar sind.

Der Erfindung liegt daher die Aufgabe zugrunde, einen Elektromotor und eine Baureihe von Elektromotoren weiterzubilden, die verschiedene Varianten umfasst. Dabei sollen aber das Lagervolumen und die Kosten verringerbar werden.

Erfindungsgemäß wird die Aufgabe bei dem Baukasten nach den in Anspruch 1 angegebenen Merkmalen gelöst.

Wichtige Merkmale der Erfindung bei dem Baukasten sind, dass er Elektromotoren mit zumindest einem Stator, einem Rotor, einer Rotorwelle, einem Gehäuse für den Stator und zwei Lagerschilden umfasst,
wobei der Baukasten verschiedene Varianten von Elektromotoren umfasst, insbesondere innerhalb einer Baugröße,
wobei das Gehäuse mindestens eine erste mechanische Schnittstelle aufweist, die zum Verbinden mit einem Lagerschild vorgesehen ist,
wobei das Lagerschild zumindest einen Lagersitz für das B-seitige Lager der Rotorwelle umfasst,
wobei das Gehäuse des Stators unverändert bleibt für alle Varianten von Elektromotoren,
**dadurch gekennzeichnet, dass**
der Baukasten verschiedene Lagerschildvarianten mit verschiedenen Schnittstellen umfasst und
wobei mindestens zwei verschiedene Lagerschilde alternativ mit dem Gehäuse B-seitig verbindbar sind,
wobei das Lagerschild der ersten Variante eine weitere Schnittstelle zur Verbindung mit einem Klemmenkastenunterteil oder alternativ mit einem Unterteil, **das eine Leistungselektronik** umfasst, und wobei das Lagerschild **der ersten Variante** gehäusebildend für eine Bremse und/oder einen Lüfter ist,
wobei das Klemmenkastenunterteil und das Unterteil jeweils eine Schnittstelle zur Verbindung mit einem Deckel aufweisen,
**wobei das Unterteil durch vergrößerte metallische Kontaktflächen wärmeleitend mit dem Lagerschild verbunden ist, damit Wärme der Leistungselektronik von Lagerschild an die Umgebungsluft abführbar ist und**
wobei die Leistungselektronik zur Wärmeabfuhr mit dem auf dem Unterteil aufgesetzten Deckel wärmeleitend verbunden ist an einer dafür vorgesehenen Kontaktfläche,
**wobei das Lagerschild der zweiten Variante einstückig mit einem weiteren Teil, wie Klemmenkastenunterteil oder Deckel, ausgeführt ist.**

Von Vorteil ist dabei, dass kein spezieller Kühlkörper notwendig ist, sondern das B-seitige Lagerschild des Elektromotors zur Wärmeabfuhr verwendbar ist. Somit ist der gesamte Elektromotor kompakter ausführbar und insbesondere der seitliche Bauraum gering.

Unter Leistungselektronik wird dabei zumindest derjenige Teil der elektronischen Komponenten verstanden, welche die Motorströme beeinflussen, insbesondere schalten, können. Üblicherweise tritt bei einer abgebbaren Motorleistung von mehr als 500 W eine letztendlich an die Umgebung abzuführende Wärmeverlustleistung der Leistungselektronik von mehr als 20 W, insbesondere bis 300 W auf. Je kW der Motorleistung erhöht sich die abzuführende Wärmeverlustleistung um einen Wert zwischen 20 und 80 Watt.

**Von Vorteil ist bei dem erfindungsgemäßen Baukasten weiter,** dass mit möglichst wenigen Bauteilen viele verschiedene Varianten herstellbar sind. Für jede Anforderung an Funktionalität ist unter Verwendung möglichst weniger Komponenten eine möglichst kompakte Ausführung erreichbar. Wichtig ist dabei, dass der Baukasten, also die Baureihe, nur Lagerschilde mit verschiedenen Schnittstellen vorsieht. Das Gehäuse des Stators bleibt unverändert. Somit ist dieses stets bei allen Varianten der Baureihe verwendbar. Die Schnittstellen des Lagerschildes zum Gehäuse des Stators hin ermöglicht den Anbau verschiedener Lagerschilde. Bei einem dieser Lagerschilde ist ein Klemmenkasten integrierbar, beim anderen lösbar verbindbar und alternativ gegen einen Umrichter austauschbar. Die letztgenannte Schnittstelle zum Klemmenkasten hin ist sogar um 90° versetzt orientierbar als die Schnittstelle zum Stator hin. Sie muss also nicht koaxial angeordnet sein.

Wichtiger Vorteil bei der Erfindung ist auch, dass das B-Lagerschild und nicht das Gehäuse des Stators zum Variieren innerhalb der Baureihe verwendet wird. Denn es wird dadurch nicht nur erreicht, dass Stator und Rotorpaket stets gleichartig aufgebaut sind, sondern dass je nach Anforderung verschiedene Bauvolumen des Lagerschildes zusammen mit dem Klemmenkasten beziehungsweise Umrichtergehäuses fällt im B-seitigen Bereich an. In der Mehrzahl der Maschinen und Anlagen, in welche Elektromotoren eingebaut werden ist aber im B-seitigen Bereich mehr Volumen zur Verfügung als im A-seitigen Bereich oder im Bereich über dem axial vorderen, also A-seitigeren Bereich des Gehäuses des Stators. Darüber hinaus ist im B-seitigen Bereich ein einfacherer Zugang bei Wartungsarbeiten möglich als im A-seitigen Bereich.

Weiter vorteilig ist, dass die Verbindungen mittels Dichtungen dicht und lösbar ausführbar sind. Somit ist hohe Schutzart erreichbar, insbesondere zumindest IP65.

Die Schnittstellen des Lagerschildes sind zur mechanischen Verbindung mit den genannten Teilen vorgesehen. Darüber hinaus weist das Lagerschild aber auch noch weitere Funktionen auf, nämlich insbesondere die Wärmeableitfunktion für Leistungselektronik aus dem Klemmenkasten- oder Umrichter-Innenraum. In jedem Fall ist vom Lagerschild stets eine gehäusebildende Funktion für einen mit der Rotorwelle mitdrehenden Lüfter ausführbar. Dieser führt kühle Umgebungsluft zu und erhöht somit den vom Lagerschild an die Umgebung fließenden Wärmestrom.

Weiter integrierte Funktionalität des Lagerschildes ist die Führungsvorrichtung für die Ankerscheibe und Reibscheibe der gegebenenfalls vorhandenen Bremse in axialer Richtung. Das Lagerschild vereint also auch die mechanischen Funktionen der Haltekraft für das B-seitige Lager und die mechanischen Führungskräfte für die Komponenten der Bremse, wie Ankerscheibe und dergleichen.

Bei einer vorteilhaften Ausgestaltung ist ein Gehäusedeckel mit dem Unterteil, Klemmenkastenunterteil oder Lagerschild mit einstückigem Klemmenkastenunterteil verbunden. Von Vorteil ist dabei, dass ein dicht in hoher Schutzart abgeschlossener Innenbereich für empfindliche Elektronik vorsehbar ist.

Bei einer vorteilhaften Ausgestaltung ist das Unterteil oder Klemmenkastenunterteil auf das Lagerschild in mindestens zwei verschiedenen Orientierungen verbindbar, insbesondere in 90° gegeneinander versetzt Orientierungsrichtungen. Von Vorteil ist dabei, dass je nach Anforderung der Applikation, also Bauform der Maschine oder Anlage, die optimale Ausrichtung wählbar ist.

Bei einer vorteilhaften Ausgestaltung ist statt der Umrichterelektronik eine Sanftanlaufelektronik vorgesehen. Von Vorteil ist dabei, dass Kosten einsparbar sind, da eine Sanftanlaufelektronik einen geringeren Entwicklungsaufwand aufweist und auch mit weniger Bauteilen herstellbar ist.

Bei einer vorteilhaften Ausgestaltung weist zumindest das erste Lagerschild eine fein bearbeitete Kontaktfläche zur wärmeleitenden Verbindung mit der Leistungselektronik auf. Von Vorteil ist dabei, dass das Lagerschild als mechanische Befestigung und wärmeableitende Vorrichtung verwendbar ist.

Bei einer vorteilhaften Ausgestaltung ist die Leistungselektronik mit dem Lagerschild wärmeleitend zur Abfuhr von Wärme an die Umgebung verbunden. Von Vorteil ist dabei, dass die Wärme an ein Teil abgeführt wird, das von einem Kühlluftstrom abkühlbar ist.

Bei einer vorteilhaften Ausgestaltung ist das zweite Lagerschild mit einem Sensor ausgeführt, der am Umfang des Lüfters physikalische Eigenschaften des Lüfters oder einer mit diesem verbundenen Komponente detektiert. Von Vorteil ist dabei, dass der Lüfter einen größeren Durchmesser als die Rotorwelle aufweist und somit die Winkelauflösung verbessert ist. Außerdem ist kein kostspieliges aufwendiges Gebersystem notwendig sondern es genügt ein Magnetring oder eine Magnet-Folie.

Bei einer vorteilhaften Ausgestaltung ist das erste Lagerschild gehäusebildend für eine elektromagnetisch betätigbare Bremse und/oder einen Lüfter. Von Vorteil ist dabei, dass das Lagerschild gekühlt wird. Außerdem ist kein zusätzliches Gehäuse für die Bremse notwendig.

Bei einer vorteilhaften Ausgestaltung ist das erste und zweite Lagerschild jeweils verbindbar mit einem gleichartigen Lüfterhaubengitter. Von Vorteil ist dabei, dass dasselbe Lüfterhaubengitter mehrfach verwendbar ist innerhalb der Baureihe.

Bei einer vorteilhaften Ausgestaltung ist das Gehäuse des Stators A-seitig mit einem Lagerschild verbindbar, das einen Lagersitz zur Aufnahme des A-seitigen Lagers der Rotorwelle umfasst. Von Vorteil ist dabei, dass der gesamte Elektromotor drei Haupt-Gehäuseteile aufweist, nämlich das Gehäuse des Stators und die beiden Lagerschilde. Wenn nun ein Elektromotor mit größerem Drehmoment erforderlich ist, ist nur die Rotorwelle mit Rotor, der Stator und das Gehäuse des Stators auszutauschen gegen beispielhaft axial länger ausgeführte Teile, wobei die restlichen Teile beibehalten werden können.

Bei einer vorteilhaften Ausgestaltung weist das Lagerschild Führungsvorrichtungen auf für die axiale Führung der Ankerscheibe der Bremse, insbesondere dass die Führungsvorrichtungen als Ausnehmungen ausgeführt sind. Von Vorteil ist dabei, dass kein spezielles Teil zur Ausführung der Führungsfunktion notwendig ist, sondern diese Funktion in das Lagerschild mitintegrierbar ist.

**Bei einer vorteilhaften Ausgestaltung ist der ersten mechanischen Schnittstelle eine erste elektrische Schnittstelle zugeordnet und der zweiten mechanischen Schnittstelle eine zweite elektrische Schnittstelle zugeordnet.**

Weitere Vorteile ergeben sich aus den Unteransprüchen.

### Bezugszeichenliste

- 1: Lagerschild
- 2: Ankerscheibe
- 3: Magnetkörper
- 4: Klemmenkastenunterteil, Anschlusskastenunterteil
- 5: Belagträger
- 6: Statorwicklung
- 7: Rotorwelle
- 8: A-seitiges Lager
- 9: Rotor
- 10: B-seitiges Lager
- 11: Reibscheibe
- 12: Lüfterflügel
- 13: Lüfter
- 14: Gehäusedeckel
- 15: Gehäuse
- 16: Dichtung
- 17: Dichtung
- 18: Kabel-Verschraubungen als Kabelaustrittsöffnungen
- 19: Lüfterhaubengitter
- 20: Kabel-Verschraubung
- 21: Leiterplatte
- 22: Anschlussvorrichtungen
- 23: Leiterplatte
- 24: elektrische Steckverbindung mit Stecker und Gegensteckvorrichtung
- 25: Gehäusedeckel
- 26: Unterteil
- 27: Leistungselektronik
- 30: Lagerschild
- 31: Gehäusedeckel
- 32: Lüfterhaubengitter
- 33: Labyrinthdichtung
- 34: Wellendichtring
- 35: Kabelverschraubungen
- 40: Sensor
- 41: Magnet-Folie, die auf dem Lüfter aufgebracht ist
- 51: Vertiefungen für Labyrinthdichtung
- 52: Knockout
- 53: Ausnehmungen
- 61: Dichtung
- 62: Knockout
- 63: Lagerschild
- 64: Klemmenkasten
- 91: Unterteil

### Die Erfindung wird nun anhand von Abbildungen näher erläutert:

In der Figur 1 a und 1 b ist ein erfindungsgemäßer Elektromotor mit Bremse und Lüfter in Draufsicht und Schnittansicht gezeichnet.

In der Figur 2a und 2b ist ein erfindungsgemäßer Elektromotor mit Bremse und Lüfter in Draufsicht und Schnittansicht gezeichnet, bei dem ein den Klemmenkasten ersetzendes Unterteil vorgesehen ist, das zusammen mit dem aufsetzbaren Deckel eine Elektronik mit Umrichterfunktionalität umfasst.

In der Figur 3a und 3b ist ein erfindungsgemäßer Elektromotor mit Bremse und Lüfter in Draufsicht und Schnittansicht gezeichnet, wobei der Klemmenkasten einstückig ausgeführt ist mit dem B-seitigen Lagerschild.

In der Figur 4a und 4b ist ein erfindungsgemäßer Elektromotor mit Bremse und Lüfter in Draufsicht und Schnittansicht gezeichnet, wobei der Klemmenkasten einstückig ausgeführt ist mit dem B-seitigen Lagerschild und der Lüfter einen Geberring trägt, der von einem Sensor detektierbar ist.

In der Figur 5a und 5b ist ein erfindungsgemäßes Lagerschild in Draufsicht und Schnittansicht gezeichnet.

In Figur 6a und 6b ist das Lagerschild mit verbundenem Klemmenkasten gezeigt.

In Figur 7a und 7b ist ein zugehöriger Elektromotor gezeigt.

In Figur 8a und 8b ist zusätzlich ein Sensor gezeigt.

In Figur 9a und 9b ein Elektromotor mit Lüfter, aber ohne Bremse gezeigt.

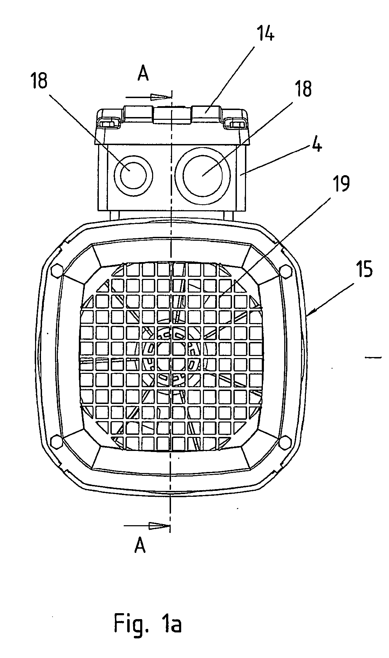

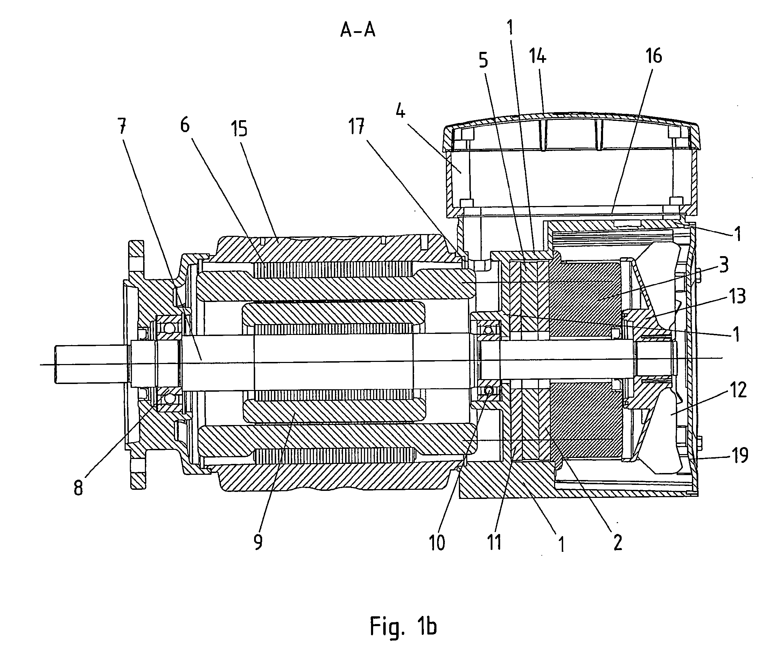

In der Figur 1 a und 1 b ist ein erfindungsgemäßes Lagerschild 1 eines Elektromotors mit Bremse gezeigt. Das Lagerschild weist einen Lagersitz für das B-seitige Lager 10 des Elektromotors auf. Dazu ist der Lagersitz geeignet bearbeitetet. Der Elektromotor umfasst eine Statorwicklung 6, die innerhalb des Gehäuses 15 vorgesehen ist und eine Rotorwelle 7, die A-seitig über das Lager 8 im A-seitigen Lagerschild und B-seitig über das Lager 10 im B-seitigen Lagerschild gelagert ist. Der Rotor 9, umfassend Rotorwelle 7 und Rotorpaket, ist als Kurzschlussläufer ausgeführt zur Bildung eines Asynchronmotors. Bei weiteren erfindungsgemäßen Ausführungsbeispielen ist der Rotor aber auch zur Bildung eines Synchronmotors, Reluktanzmotors oder eines anderen Motors ausführbar.

Die Rotorwelle trägt an ihrem B-seitigen Ende einen Lüfter 13 mit Lüfterflügeln 12. Axial davor ist eine Bremse vorgesehen, die eine im Magnetkörper 3 sich befindende Bremsspule und eine axial bewegbare Ankerscheibe 2 umfasst. Die Ankerscheibe 2 wird bei Bestromung der Bremsspule zu dieser hingezogen, wobei gegenwirkende Federkraft von sich im Magnetkörper abstützenden Federelementen überwunden wird. Bei Nichtbestromung drücken daher die Federelemente derart auf die Ankerscheibe, dass diese auf den Belagträger gedrückt wird, welcher auf beiden axial orientierten Flächen Bremsbeläge trägt. Der Belagträger ist außerdem in radialer und in Umfangsrichtung formschlüssig mit der Rotorwelle 7 verbunden. Somit drückt die Ankerscheibe 2 bei Nichtbestromung der Bremsspule den Belagträger 5 auf die axial nach dem Belagträger angeordnete Reibscheibe 11.

Das Gehäuse 15 des Elektromotors weist zum Lagerschild 1 hin eine mechanische Schnittstelle auf, so dass das Lagerschild 1 mit dem Gehäuse 15 dicht, fest und genau verbindbar ist. Das Lagerschild 1 weist selbstverständlich eine entsprechend passende Schnittstelle auf.

Das Lagerschild 1 weist eine weitere elektrische Schnittstelle zum als Anschlusskasten ausgeführten Klemmenkasten hin auf. Dieser besteht aus einem Gehäusedeckel 14 und einem Klemmenkastenunterteil 4, das mit dem Lagerschild 1 dicht und fest verbindbar ist. Dabei ist im Verbindungsbereich eine Dichtung 16 vorgesehen.

Die Schnittstelle zwischen dem Gehäuse 15 und dem Lagerschild 1 ist ebenfalls zur dichten Verbindung ausführbar. Dazu ist die Dichtung 17 vorgesehen.

Das Klemmenkastenunterteil 4 weist als Kabelaustrittsöffnungen ausgeführte Kabel-Verschraubungen 18 auf. Alternativ sind bei weiteren erfindungsgemäßen Ausführungsbeispielen die Kabelverschraubungen im zugehörigen Deckel vorgesehen.

Die Dichtungen 17, 16 sind auch derart ausführbar, dass sie eine Wärmesperrenfunktion ausführen. Somit ist der Wärmeaustausch zwischen den metallischen Teilen, nämlich Gehäuse 15 und Lagerschild 1, stark verringerbar. Ebenso ist der Wärmeaustausch zwischen Lagerschild und Klemmenkastenunterteil stark verringerbar.

Eine zusätzliche Maßnahme zur Verringerung dieses Wärmeaustausches ist bei anderen erfindungsgemäßen Ausführungsbeispielen, das Klemmenkastenunterteil 4 nicht aus Metall sondern aus einem Kunststoff oder einem anderen thermischen Isolator zu fertigen. Die Dichtung 16 ist bei weiteren erfindungsgemäßen Ausführungsbeispielen nicht nur als Flachdichtung oder O-Ring ausführbar sondern auch als wärmeisolationswirksames Spritzgussteil, das den Raumbereich des Lagerschildes 1 samt Bremse und Lüfter abtrennt vom Innenraum des Klemmenkastenunterteils oder auch vom Deckel 14.

B-seitig weist das Lagerschild 1 eine Öffnung zum Durchlass von Luft auf. Diese ist aus Sicherheitsgründen von einem Lüfterhaubengitter 19 abgeschlossen.

Zwischen Klemmenkastenunterteil 4 und zugehörigem Deckel 14 gemäß Figur 1 a und 1 b ist ebenfalls eine Dichtung vorgesehen. Diese ist in erfindungsgemäßen Ausführungsbeispielen derart wärmeleitend ausgeführt, dass Wärme der elektronischen Schaltung über den Deckel nicht nur an die Umgebung sondern auch an das Klemmenkastenunterteil abführbar ist. Die Wärmeleitung erfolgt dabei über die Kontaktflächen des Klemmenkastenunterteils 4 und zugehörigem Deckel 14, welche sich um den Raumbereich der Dichtung selbst herum erstrecken, wobei die Dichtung als Flachdichtung, O-Ring oder Ähnliches, ausführbar ist. Vom Deckel ist dann Wärme abführbar ans Lagerschild und an die Umgebung, da es gehäusebildende Funktion hat. Bei einem anderen erfindungsgemäßen Ausführungsbeispiel wird ganz im Gegensatz dazu die Dichtung nicht wärmeleitend sondern wärmesperrend ausgeführt, wobei dann die Kontaktflächen hierfür klein vorgesehen werden und gegebenenfalls eine zusätzliche Wärmesperre eingebracht ist.

Die Dichtung 16 ist aber bei anderen erfindungsgemäßen Ausführungsbeispielen auch wärmeleitend vorsehbar, insbesondere können die metallischen Kontaktflächen, welche um den Raumbereich der Dichtung herum vorgesehen sind, vergrößert ausgeführt werden und somit kann eine genügend große Berührfläche vorgesehen werden, welche zu einer Verringerung des Wärmeübergangswiderstandes führt. Dies hat zum Vorteil, dass das Lagerschild 1 und das Klemmenkastenunterteil gut wärmegekoppelt sind, also einen geringen Wärmeübergangswiderstand aufweisen. Somit ist die Wärme von der elektronischen Schaltung übers Klemmenkastenunterteil nicht nur an die Umgebung sondern auch an das Lagerschild abführbar. Daher ist ein speziell geformter Kühlkörper nicht notwendig und insgesamt ein geringeres Bauvolumen, insbesondere seitlich, notwendig.

Bei anderen erfindungsgemäßen Ausführungsbeispielen ist auch die Dichtung 17 wärmeleitend ausführbar. Dies ist immer dann vorteilhaft, wenn im Stator und dem zugehörigen Gehäuse die Temperatur stets geringer ist als im Bereich des Lagerschildes und somit Wärme zum Stator und seinem Gehäuse zuführbar ist. Somit ist der gesamte Elektromotor noch kleiner ausführbar.

Wesentlicher Vorteil bei der Erfindung ist, dass das Lagerschild 1 mit den genannten zwei definierten Schnittstellen ausgestattet ist. Somit sind auch andere Komponenten anstatt der in Figur 1 a und 1 b gezeigten verbindbar.

Wesentlich ist bei der Erfindung auch, dass die Elektronik nicht in axialer Richtung sondern radial, also seitlich, angeordnet ist. Vorteilig ist dabei, dass die Baulänge gering gehalten wird. Seitlich ist bei Maschinen und Anlagen meist ein gewisses Volumen frei und für den Bediener zugänglich, weil der Anschlusskasten des Motors meist seitlich liegt und die Baulänge kostspieliger ist hinsichtlich der Gesamtkosten. Das seitlich freie Volumen wird durch die Erfindung genutzt und nur unwesentlich mehr Bauraum in seitlicher Richtung benötigt. Insbesondere die Kühlung mittels Lüfter ermöglicht eine kleine Ausführung der Elektronik und bewirkt somit ein geringes seitliches Bauvolumen. Darüber hinaus ist der Kühlkörper klein ausführbar oder vernachlässigbar, da Wärme über das Lagerschild des Motors abgeführt wird und von diesem über den vom Lüfter angetriebenen Kühlluftstrom an die Umgebung abgeführt wird.

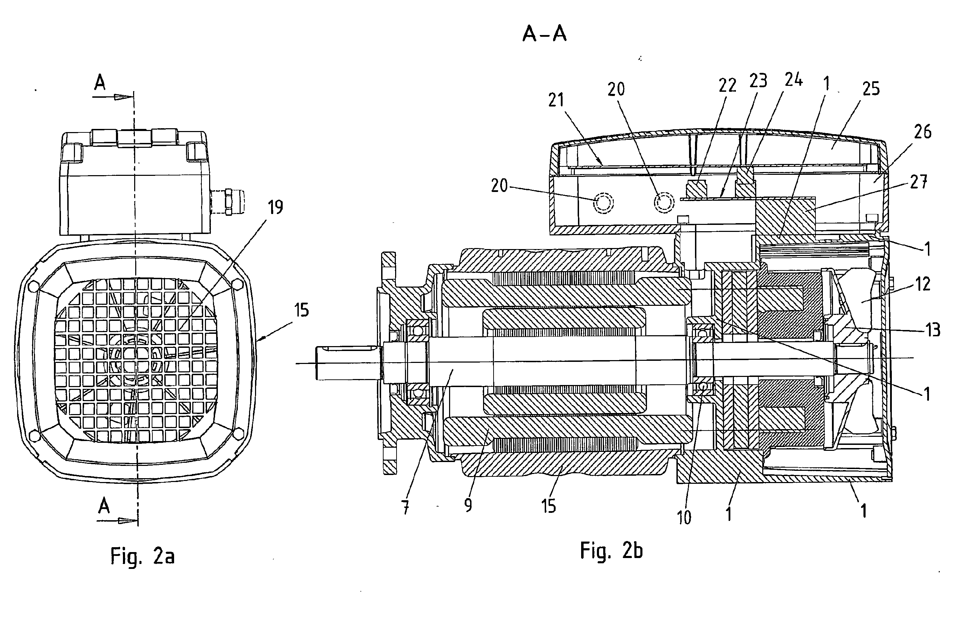

In den Figuren 2a und 2b ist ein anders ausgeformtes Unterteil 26 anstatt des Klemmenkastenunterteils 4 aufgesetzt und dicht lösbar verbunden. Es ragt über in Richtung des Motors. Somit ist Platz geschaffen für Signalelektronik und Leistungselektronik im Innenbereich des Unterteils 26 und Gehäusedeckels 25. Die Versorgungskabel und auch Signalleitungen sowie Bus-Leitungen, insbesondere Feldbus-Leitungen, sind durch Kabel-Verschraubungen 20 geführt, wodurch der gesamte Elektromotor wie auch der Elektromotor nach Figur 1a und 1b, in hoher Schutzart ausführbar ist, insbesondere mindestens mit IP65. Die Anschlussvorrichtungen 22 sind auf einer Leiterplatte 23 vorgesehen, die im Innenbereich des Unterteils 26 vorgesehen ist.

Weiteres Merkmal der Erfindung ist, dass das axiale Ende des Deckels und des Unterteils 26 an im Wesentlichen derselben axialen Position abgeschlossen ist wie die Lüfterhaube.

Im Innenbereich ist eine Leiterplatte 21 vorgesehen, die mit dem Gehäusedeckel lösbar verbunden ist. Sie trägt die Signalelektronik.

Im Unterteil 26 ist eine Leiterplatte 23 mit Leistungselektronik 27 angeordnet, die ein Steckverbinderteil für eine elektrische Steckverbindung mit einem weiteren Steckverbinderteil trägt, wobei das weitere Steckverbinderteil mit der Leiterplatte 21 verbunden ist. Die Leistungselektronik 27 ist wärmeleitend mit dem Lagerschild 1 verbunden. Dazu weist das Lagerschild eine fein bearbeitete Fläche auf, die als Kontaktfläche verwendbar ist. Zur Verbesserung des Wärmeübergangswiderstandes ist auch Wärmeleitpaste hinzufügbar.

Somit ist das Lagerschild 1 als multifunktionales Teil ausgeführt. Es weist also nicht nur die genannten mechanischen Schnittstellen auf sondern es dient auch zur Ableitung der Wärme der Leistungselektronik an die Umgebung. Zur Verbesserung dieser Ableitung von Wärme ist es vorteilhaft, dass das Lagerschild durch den Lüfter eine zusätzliche aktive Zufuhr von Kühlluft aus der Umgebung erfährt. Somit ist nicht nur der Stator des Elektromotors sondern auch die Leistungselektronik 27 kühlbar.

Die Signalelektronik und Leistungselektronik sind zusammen als Umrichter ausgeführt. Somit ist der Stator des Elektromotors von diesem Umrichter versorgbar und daher der gesamte Elektromotor vom Umrichter aus steuerbar. Vorteiligerweise wird der Umrichter mit Drehstrom versorgt.

Die Leistungselektronik umfasst dabei zumindest den Gleichrichter und die pulsweitenmoduliert ansteuerbare Endstufe, also den Wechselrichter, der aus der gleichgerichteten Spannung eine Wechselspannung mit einer von der Steuerungselektronik vorgegebenen Frequenz erstellt. Die zugehörigen elektronischen Leistungsschalter geben die von ihnen erzeugte Wärme an einen Träger ab, der wiederum mit dem Leistungsschild 1 wärmeleitend verbunden ist. Der Träger ist mechanisch mit dem Lagerschild verbindbar, insbesondere kraftschlüssig.

Bei weiteren erfindungsgemäßen Ausführungsbeispielen ist die Leistungselektronik wärmeleitend mit dem Deckel verbunden, der eine zur Wärmeübertragung geeignete Kontaktfläche aufweist..

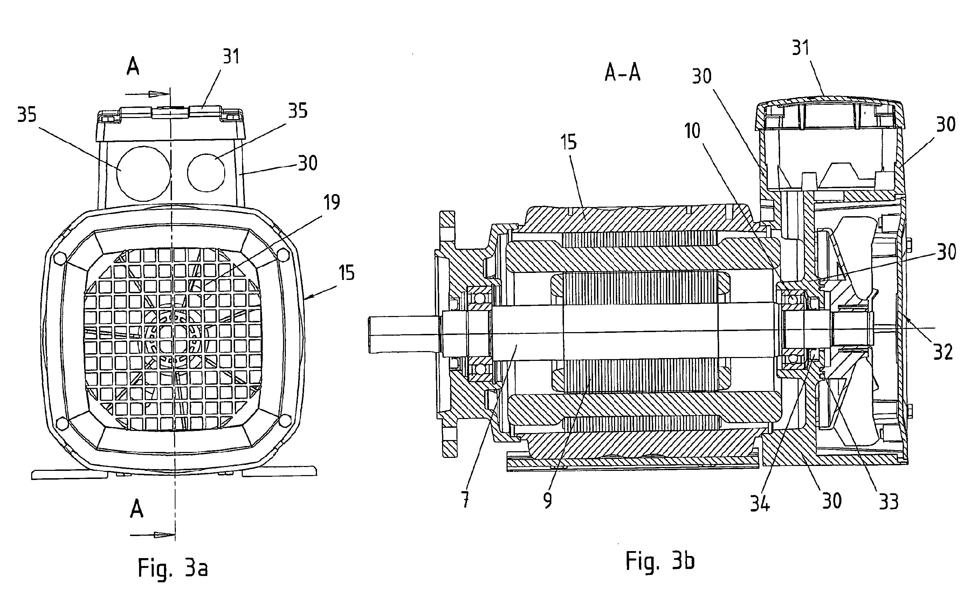

In den Figuren 3a und 3b ist derselbe Stator mit dem Gehäuse 15 vorgesehen, wobei aber ein anderes Lagerschild 30 verbunden ist. Das Lagerschild 30 weist wiederum dieselbe Schnittstelle zum Stator und dem Gehäuse 15 hin auf. Jedoch ist der Klemmenkasten einstückig mit dem Lagerschild 30 ausgeführt. Dies erniedrigt die Fertigungskosten. Ein Gehäusedeckel 31 ist ebenso vorgesehen. Weil keine Bremse vorgesehen ist und wegen der einstückigen Ausführung und dem damit verbundenen Verzicht auf Befestigungsmittel, ist der Elektromotor insgesamt sehr viel kompakter ausführbar.

Das Lüfterhaubengitter 32 ist gleichartig ausführbar zum Lüfterhaubengitter 19 der Figuren 1a, 1b, 2a und 2b.

Die Labyrinthdichtung 33 und der Wellendichtring 34 ermöglichen wiederum die Ausführbarkeit in hoher Schutzart, insbesondere zumindest IP65. Die Labyrinthdichtung 33 dichtet zwischen dem Lagerschild und dem drehbaren Lüfter ab, wobei nur äußerst geringe Reibungsverluste auftreten. Der Wellendichtring 34 erhöht die Abdichtfunktion deutlich. Auch durch die einstückige Ausformung eines Klemmenkastenunterteils ist eine hohe Dichtheit und Schutzart mit einfachen Mitteln in kostengünstiger Weise erreichbar.

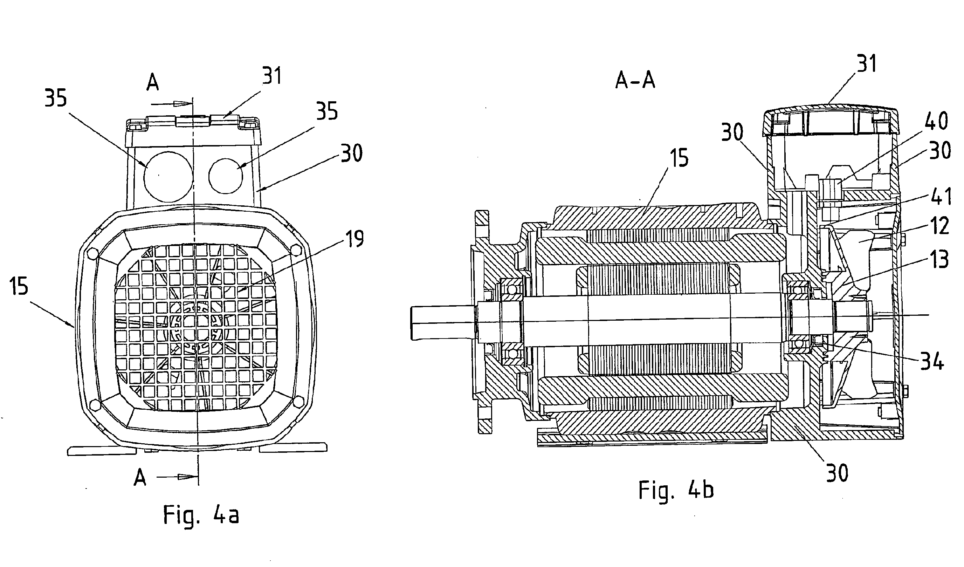

In den Figuren 4a und 4b ist wiederum eine andere Variante gezeigt. Dabei ist das Lagerschild 30 der Figur 3a und 3b wiederverwendet. Ebenso ist der Stator und das Gehäuse 15 dasselbe. Jedoch ist nun ein Sensor vorgesehen, der am Lagerschild lösbar mechanisch verbunden ist und elektrisch mit einer elektronischen Schaltung verbunden ist, die im Innenbereich oder Außenbereich des Klemmenkastens vorsehbar ist. Im letztgenannten Fall sind die Signalleitungen des Sensors durch die Kabelverschraubungen 35 des Klemmenkastens herausgeführt. Der Sensor detektiert Magnet-Folie 41, die auf dem Lüfter aufgebracht ist und am Umfang mit abwechselnder Magnetisierungsrichtung vorgesehen ist. Alternativ ist vorzugsweise ein kunststoffgebundener Ferrit mit abwechselnder Magnetisierungsrichtung verwendbar.

Wesentlich bei der Erfindung ist, dass eine Baureihe von Elektromotoren geschaffen ist, die je nach Applikation des Motors verschiedene Varianten herstellbar vorsieht, wobei aber innerhalb dieses Baukastens möglichst viele Teile wiederverwendbar sind. Beispielsweise ist immer derselbe Stator samt Gehäuse 15 mit verschiedenen Lagerschilden verbindbar, wobei ein erstes Lagerschild eine Bremse und einen Lüfter umfasst und ein zweites Lagerschild nur einen Lüfter umfasst. Außerdem ist das erste Lagerschild mittels seiner nach oben gerichteten Schnittstelle verbindbar mit einem Klemmenkasten, also Anschlusskasten, oder mit einem Umrichter oder mit einem andersartigen elektronischen Gerät.

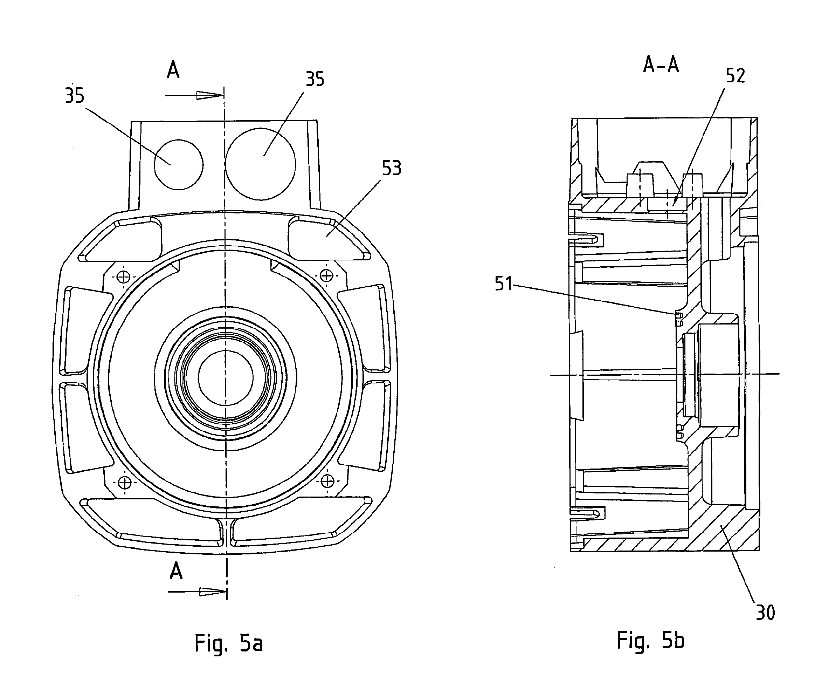

In der Figur 5a und 5b ist ein erfindungsgemäßes Lagerschild in Draufsicht und Schnittansicht gezeichnet, wobei ein Klemmenkasten angegossen ist. Dabei weist das Lagerschild Vertiefungen 51 für Labyrinthdichtung auf. Das Knockout 52 ist nach Herstellung des Lagerschildes vorhanden und ist in einfacher Weise leicht entfernbar, wenn eine Ausnehmung zur Aufnahme des Sensors erforderlich ist. Bloßes Drücken mit einem Werkzeug genügt. Durch die Ausnehmungen 53 strömt die vom Lagerschild erwärmte Kühlluft hindurch.

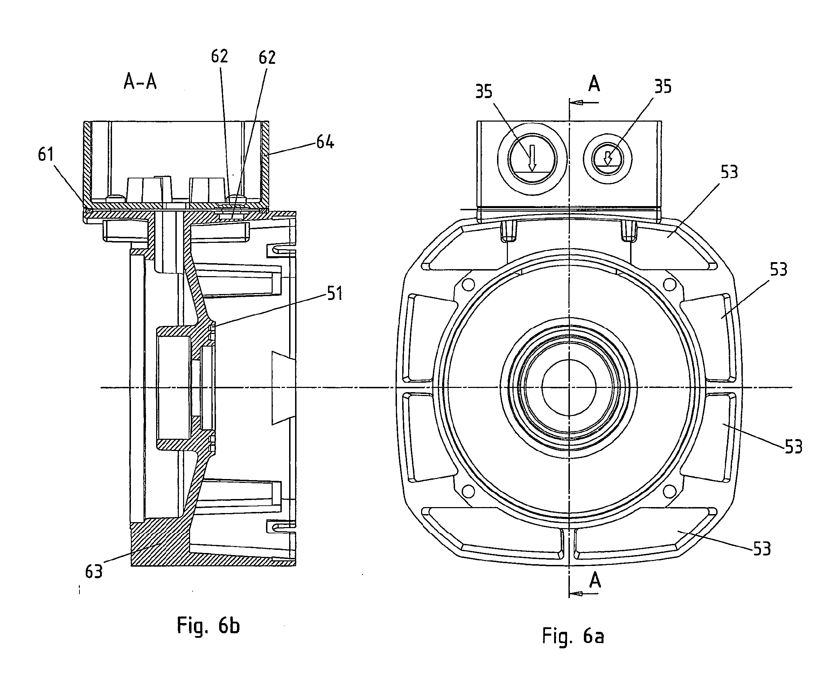

In Figur 6a und 6b ist ein alternatives erfindungsgemäßes Lagerschild 63 gezeigt, wobei der Klemmenkasten 64 separat ausgebildet ist. Zur Herstellung einer dichten Verbindung mit dem Lagerschild 63 ist eine Dichtung 61 eingelegt. Außerdem ist der Klemmenkasten an der Schnittstelle zum Lagerschild derart geformt, dass auch ein Formschluss vorgesehen ist, der gleichzeitig die Dichtung schützt, also gehäusebildende Funktion für diese mit ausgeführt ist.

Zur Montage eines Sensors sind die Knockout 62 vorgesehen, die kostengünstig fertigbar sind und beim Montieren in einfacher Weise entfernbar sind.

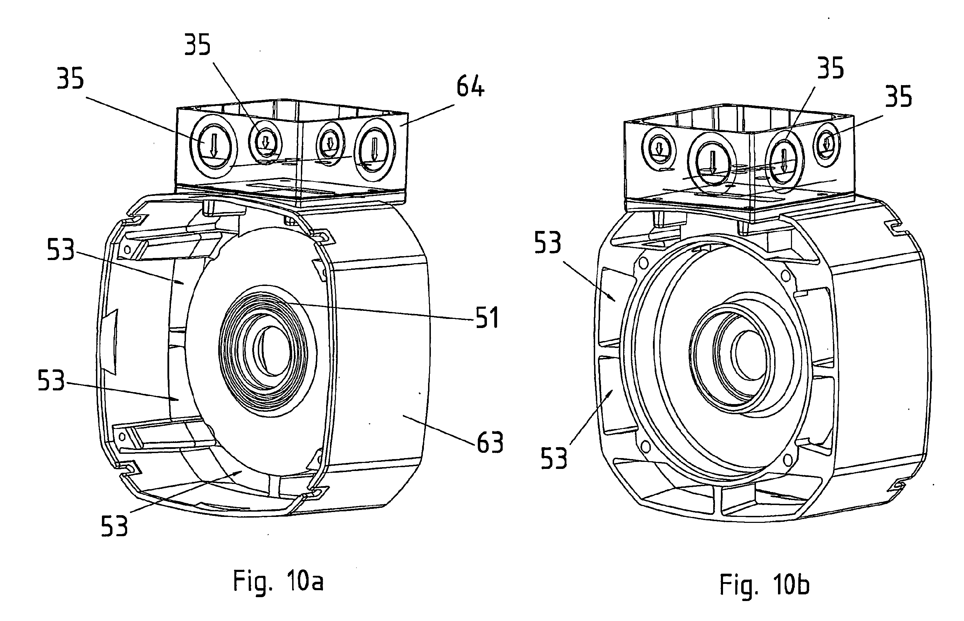

In den Figuren 10a und 10b ist eine räumliche Ansicht von schräg vorne und hinten, die zu dem Lagerschild 63 der Figuren 6a und 6b gehört. Der aufgesetzte und lösbar verbundene Klemmenkasten 64 ist ebenfalls gezeigt. Die Ausnehmungen 53 zur Durchleitung von Luft sind besser zu sehen. Das Lüftergitter, wo die Luft angesaugt wird, ist nicht gezeigt. Die Luft strömt dann am anderen axialen Ende des Lagerschildes 63 derart heraus, dass der Luftstrom über das Gehäuse 15 des Elektromotors geleitet wird und auch dort zur Wärmeabfuhr kühlend wirksam ist.

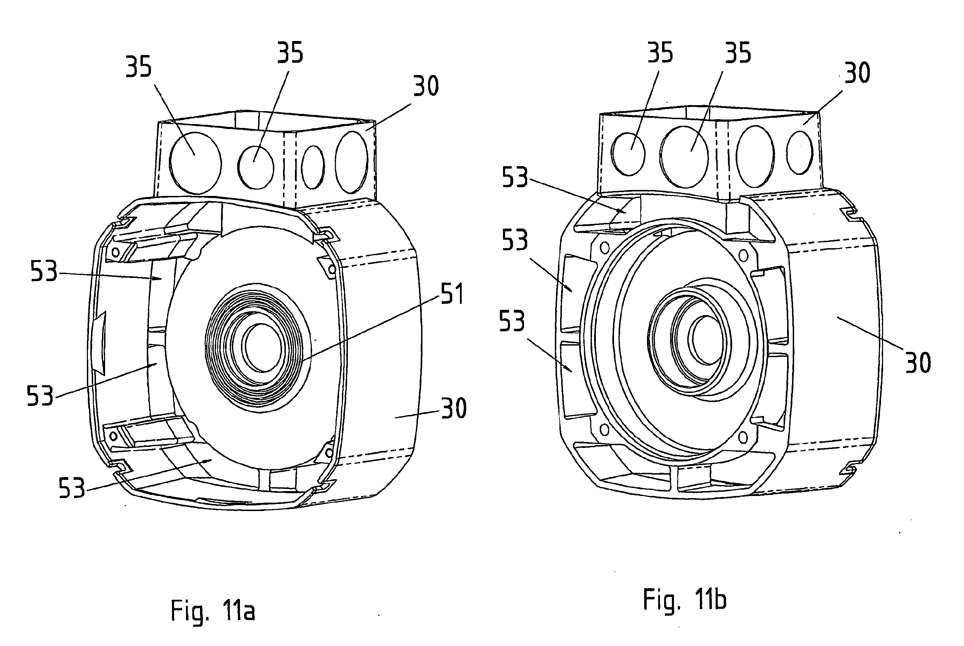

In den Figuren 11a und 11b ist eine räumliche Ansicht von schräg vorne und hinten, die zu dem Lagerschild 30 der Figuren 5a und 5b gehört. Die Ausnehmungen 53 zur Durchleitung von Luft sind besser zu sehen. Das Lüftergitter, wo die Luft angesaugt wird, ist nicht gezeigt. Die Luft strömt dann am anderen axialen Ende des Lagerschildes 63 derart heraus, dass der Luftstrom über das Gehäuse 15 des Elektromotors geleitet wird und auch dort zur Wärmeabfuhr kühlend wirksam ist.

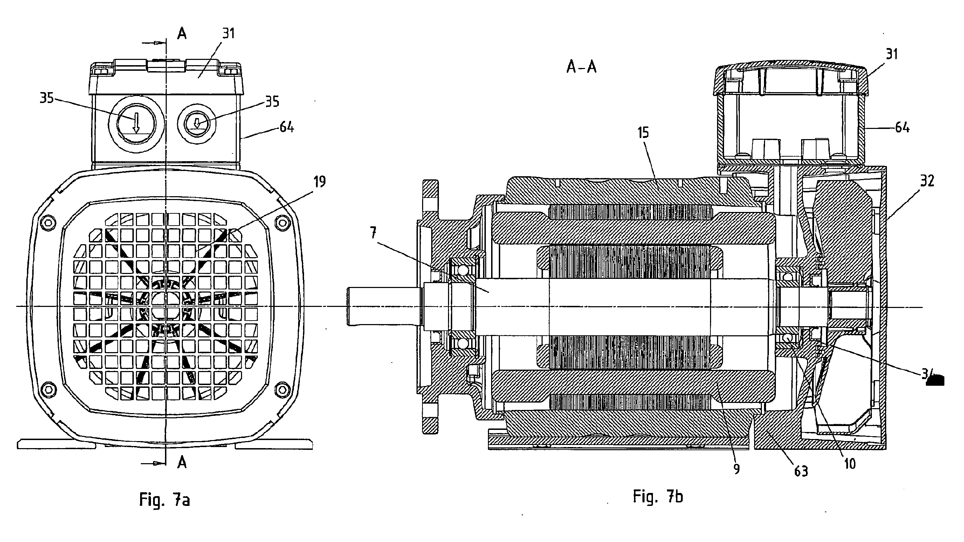

In den Figuren 7a und 7b ist der Elektromotor mit Lüfter aber ohne Bremse vorgesehen. Der Klemmenkasten ist auf das Lagerschild 63 aufgeschraubt und mittels der Dichtung 61 dicht verbunden. Auf den Klemmenkasten 64 ist der Deckel 31 aufgesetzt und dicht verbunden, wobei der Klemmenkasten 64 Kabelverschraubungen 35 umfasst.

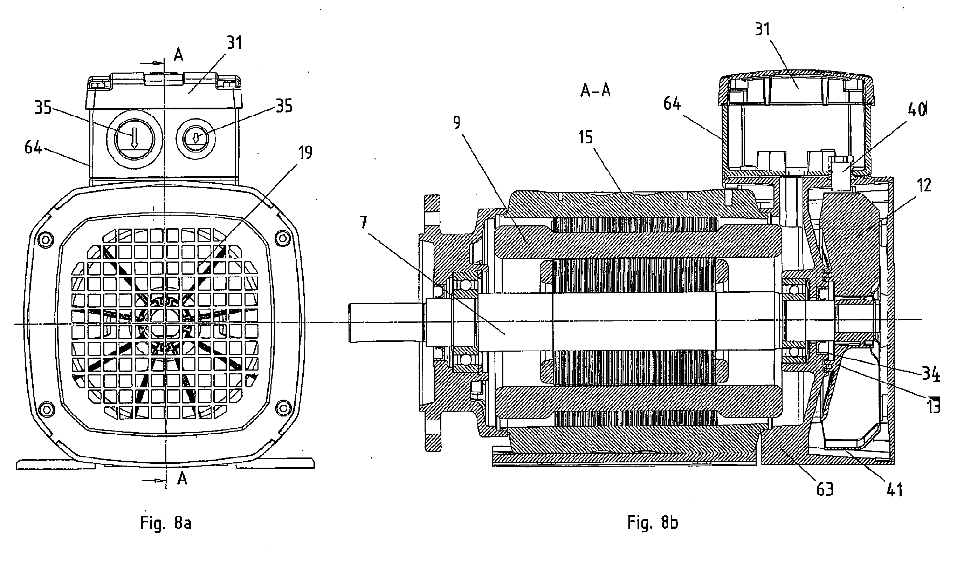

In den Figuren 8a und 8b ist wiederum ein Elektromotor gezeigt, der ähnlich wie in Figur 7a und 7b ausgeführt ist. Allerdings sind die Knockouts 62 entfernt und es ist der Sensor 40 eingesetzt. Der Sensor ist höhenverstellbar montiert. Beispielhaft ist dies mittels zweier Kontermuttern realisiert. Es sind aber auch andere Methoden zur Höhenverstellung vorteilig einsetzbar. Der Sensor 40 ist somit auf optimalen Abstand zum Lüfter einstellbar und kann somit pro Umdrehung entsprechend der Geberfahnen beziehungsweise Lüfterflügel Pulse erzeugen.

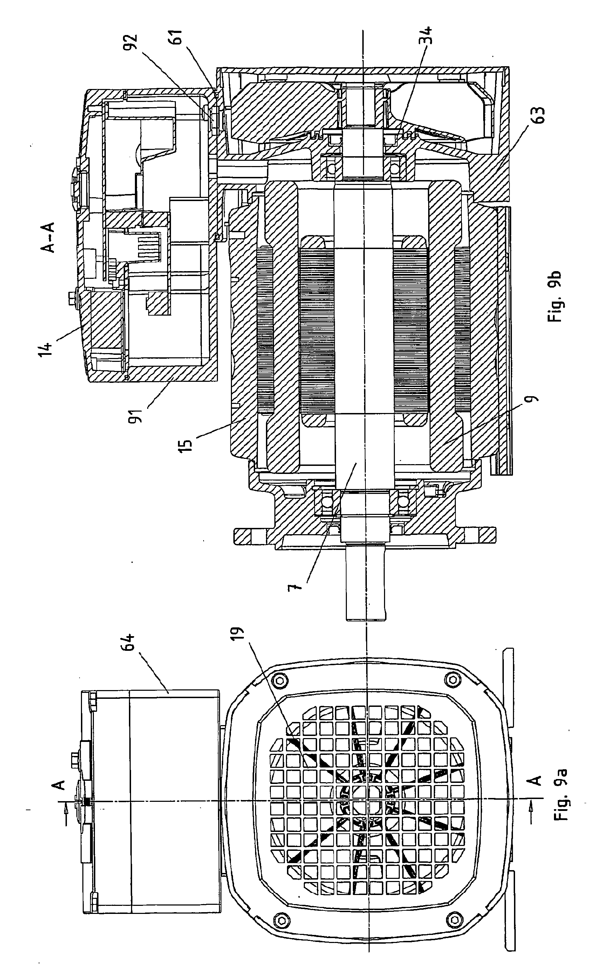

In den Figuren 9a und 9b ist wiederum ein Elektromotor gezeigt, der ähnlich wie in Figur 7a und 7b ausgeführt ist. Jedoch ist statt des Klemmenkastens ein Unterteil 91 aufgesetzt auf das Lagerschild 63. Auf das Unterteil 91 ist ein Gehäusedeckel 14 aufgesetzt. Im vom Unterteil 91 und vom Gehäusedeckel 14 umschlossenen Innenraum ist eine elektronische Schaltung, wie auch in der Beschreibung zu Figur 2a und 2b erwähnt, vorsehbar. Also ist ein Umrichter, eine Sanftanlaufschaltung oder ein Motorschalter oder eine andere elektronische Schaltung realisierbar.

In weiteren erfindungsgemäßen Ausführungsbeispielen ist der Sensor direkt auf der Leiterplatte 23 aufgebracht und die Leiterplatte sehr genau positionierbar. Somit ist es dem Sensor von dieser Anordnung heraus direkt ermöglicht, die abwechselnde Magnetisierungsrichtung am Lüfter zu erkennen. Aus den Sensor-Signalen ist die Ableitung von Informationen über die Drehzahl und Drehrichtung ermöglicht. Somit ist ein verbessertes Steuern und/oder Regeln des Elektromotors ausführbar.

In weiteren erfindungsgemäßen Ausführungsbeispielen ist die Signalelektronik und Leistungselektronik nicht als Umrichter sondern als Sanftanlaufgerät, also Starter, ausgeführt. Somit sind Kosten einsparbar.

Alternativ ist die Signalelektronik und Leistungselektronik als Schalter zum An- oder Abschalten des Motors ausführbar, wobei der Schalter elektromechanisch oder elektronisch ausführbar ist.

Auch andere Motorelektronik ist als Signalelektronik und Leistungselektronik vorsehbar. Beispielsweise ist die Motorelektronik als Spannungsanpassungsmodul für den Motor und/oder die Bremse oder als Weitspannungsmodul für den Motor und/oder die Bremse ausführbar.

In anderen erfindungsgemäßen Ausführungsbeispielen ist zumindest ein Teil der Leistungselektronik mit dem Deckel wärmeleitend verbunden. Dazu muss dann der Deckel an seiner Innenseite derart bearbeitet sein, dass die Wärme von der Leistungselektronik an ihn übertragbar ist. Vorzugsweise ist diese Verbindung kraftschlüssig ausgeführt. Es sind aber auch andere Verbindungsarten vorsehbar.

In anderen erfindungsgemäßen Ausführungsbeispielen umfasst die Signalelektronik auch eine Powerline-Elektronik. Dies bedeutet, dass die elektronische Schaltung in der Lage ist, Informationen auf die Versorgungsleitungen, insbesondere Starkstromleitungen, aufzumodulieren, insbesondere unter Verwendung einer weit höheren Frequenz als 50 Hz. Beispielsweise eigenen sich vorzugsweise Frequenzen zwischen 10kHz und 10 MHz.

Besonders vorteilig ist es, das Lagerschild aus Aluminium-Druckguss herzustellen. In anderen erfindungsgemäßen Ausführungsbeispielen ist es jedoch auch vorteilhaft, das Lagerschild aus wärmeleitender Keramik vorzusehen. Somit ist für die Bremse eine verschleißarme Reibfläche vorsehbar, deren beim Bremsen erzeugte Wärme schnell und einfach vom Lagerschild abführbar ist.

In einem anderen erfindungsgemäßen Ausführungsbeispiel ist auch nur die Reibfläche aus Keramik herstellbar.

Alternativ ist das Lagerschild auch aus Guss, insbesondere Grauguss, herstellbar.

## Patentansprüche

1. Baukasten von Elektromotoren, umfassend zumindest einen Stator, einen Rotor (9), **eine Rotorwelle (7),** ein Gehäuse (15) für **den Stator und zwei Lagerschilde (1, 30, 63),**
wobei der Baukasten verschiedene Varianten von Elektromotoren umfasst, insbesondere innerhalb einer Baugröße,
wobei das Gehäuse (15) mindestens eine erste mechanische Schnittstelle aufweist, die zum Verbinden mit einem Lagerschild (1, 30, 63) vorgesehen ist,
wobei das Lagerschild (1, 30, 63) zumindest einen Lagersitz für das B-seitige Lager (10) der Rotorwelle (7) umfasst,
wobei **das Gehäuse (15) des Stators unverändert bleibt für alle Varianten von Elektromotoren,**
**dadurch gekennzeichnet, dass**
**der Baukasten verschiedene Lagerschildvarianten mit verschiedenen Schnittstellen umfasst und**
**wobei** mindestens zwei verschiedene Lagerschilde (1, 30, 63) alternativ mit dem Gehäuse (15) B-seitig verbindbar sind,
wobei **das Lagerschild (1, 30, 63) der ersten Variante** eine weitere Schnittstelle zur Verbindung mit einem Klemmenkastenunterteil (4) oder alternativ mit einem Unterteil, das **eine Leistungselektronik** umfasst, und wobei das Lagerschild (1, 30, 63) **der ersten** Variante gehäusebildend für eine Bremse und/oder einen Lüfter (13) ist,
wobei das Klemmenkastenunterteil (4) und das Unterteil jeweils eine Schnittstelle zur Verbindung mit einem Deckel (14, 31) aufweisen,
**wobei das Unterteil durch vergrößerte metallische Kontaktflächen wärmeleitend mit dem Lagerschild (1, 30, 63) verbunden ist, damit Wärme der Leistungselektronik von Lagerschild (1, 30, 63) an die Umgebungsluft abführbar ist und**
wobei **die** Leistungselektronik zur Wärmeabfuhr mit dem auf dem Unterteil (26, 91) aufgesetzten Deckel (25, 31)wärmeleitend verbunden ist an einer dafür vorgesehenen Kontaktfläche,
**wobei das Lagerschild (1, 30, 63) der zweiten Variante einstückig mit einem weiteren Teil, wie Klemmenkastenunterteil (4) oder Deckel (25, 31), ausgeführt ist.**

2. Baukasten nach Anspruch 1,
**dadurch gekennzeichnet, dass**
eine Dichtung (16) zwischen Lagerschild (1, 30, 63) und dem dem Stator zugeordneten Gehäuse (15) vorgesehen ist.

3. Baukasten nach mindestens einem der vorangegangenen Ansprüche,
**dadurch gekennzeichnet, dass**
der Deckel (25, 31) über das Unterteil (26, 91) mit dem Lagerschild (1, 30, 63) wärmeleitend verbunden ist zur Abfuhr von Wärme der Leistungselektronik (24) an die Umgebung.

4. Baukasten nach mindestens einem der vorangegangenen Ansprüche,
**dadurch gekennzeichnet, dass**
der Luftstrom des Lüfters (13) zumindest zur Kühlung des Lagerschildes (1, 30, 63) vorgesehen ist.

5. Baukasten nach mindestens einem der vorangegangenen Ansprüche,
**dadurch gekennzeichnet, dass**
das Lagerschild (1, 30, 63) Ausnehmungen aufweist, durch welche ein Kühlluftstrom hindurchleitbar ist.

6. Baukasten nach mindestens einem der vorangegangenen Ansprüche,
**dadurch gekennzeichnet, dass**
das Lagerschild (1, 30, 63) derart geformt ist, dass es zur Luftführung eines Lüfter-Luftstroms geeignet ausgebildet ist, insbesondere des Luftstroms desjenigen Lüfters (13), für welchen das Lagerschild (1, 30, 63) gehäusebildende Funktion aufweist.

7. Baukasten nach mindestens einem der vorangegangenen Ansprüche,
**dadurch gekennzeichnet, dass**
das Lagerschild (1, 30, 63) Anschlussvorrichtungen und/oder Zentriervorrichtungen aufweist für weitere, axial B-seitig anordenbare Geräte oder Vorrichtungen.

8. Baukasten nach mindestens einem der vorangegangenen Ansprüche,
**dadurch gekennzeichnet, dass**
die Geräte oder Vorrichtungen mindestens eine drehende Komponente umfassen, die mit der Rotorwelle (7) des Elektromotors direkt oder indirekt verbindbar ist, und mindestens eine nicht-drehende Komponente, die mit dem Lagerschild (1, 30, 63) verbindbar ist und/oder an diesem zentrierbar ist.

9. Baukasten nach mindestens einem der vorangegangenen Ansprüche,
**dadurch gekennzeichnet, dass**
die Geräte oder Vorrichtungen Winkelsensoren (40) sind, insbesondere feinauflösende Winkelsensoren.

10. Baukasten nach mindestens einem der vorangegangenen Ansprüche,
**dadurch gekennzeichnet, dass**
das Unterteil (26, 91) und der Deckel (25, 31) gehäusebildende Funktion für einen Sensor (40) aufweisen, wobei der Sensor (40) zur Detektion mindestens einer physikalischen Eigenschaft eines drehbar gelagerten Teils des Elektromotors vorgesehen ist, insbesondere des Lüfterflügels (12).

11. Baukasten nach mindestens einem der vorangegangenen Ansprüche,
**dadurch gekennzeichnet, dass**
der ersten mechanischen Schnittstelle eine erste elektrische Schnittstelle zugeordnet ist und dass einer zweiten mechanischen Schnittstelle eine zweite elektrische Schnittstelle zugeordnet ist.

12. Baukasten nach mindestens einem der vorangegangenen Ansprüche,
**dadurch gekennzeichnet, dass**
die erste und/oder zweite elektrische Schnittstelle eine Steckverbindung (24) umfasst.

13. Baukasten nach mindestens einem der vorangegangenen Ansprüche,
**dadurch gekennzeichnet, dass**
ein Gehäusedeckel (25, 31) mit dem Unterteil (26, 91), Klemmenkastenunterteil (4) oder Lagerschild (1, 30, 63) mit einstückigem Klemmenkastenunterteil (4) verbunden ist.

14. Baukasten nach mindestens einem der vorangegangenen Ansprüche,
**dadurch gekennzeichnet, dass**
das Unterteil (26, 91) oder Klemmenkastenunterteil (4) auf das Lagerschild (1, 30, 63) in mindestens zwei verschiedenen Orientierungen verbindbar ist, insbesondere in 90° gegeneinander versetzt Orientierungsrichtungen.

15. Baukasten nach mindestens einem der vorangegangenen Ansprüche,
**dadurch gekennzeichnet, dass**
statt einer Umrichterelektronik eine Sanftanlaufelektronik vorgesehen ist.

16. Baukasten nach mindestens einem der vorangegangenen Ansprüche,
**dadurch gekennzeichnet, dass**
zumindest das erste Lagerschild (1, 30, 63) eine fein bearbeitete Kontaktfläche zur wärmeleitenden Verbindung mit der Leistungselektronik (24) aufweist.

17. Baukasten nach mindestens einem der vorangegangenen Ansprüche,
**dadurch gekennzeichnet, dass**
die Leistungselektronik (24) mit dem Lagerschild (1, 30, 63) wärmeleitend zur Abfuhr von Wärme an die Umgebung verbunden ist.

18. Baukasten nach mindestens einem der vorangegangenen Ansprüche,
**dadurch gekennzeichnet, dass**
das zweite Lagerschild (1, 30, 63) mit einem Sensor (40) ausgeführt ist, der am Umfang des Lüfters (13) physikalische Eigenschaften des Lüfters (13) oder einer mit diesem verbundenen Komponente detektiert.

19. Baukasten nach mindestens einem der vorangegangenen Ansprüche,
**dadurch gekennzeichnet, dass**
das erste und zweite Lagerschild (1, 30, 63) jeweils verbindbar ist mit einem gleichartigen Lüfterhaubengitter (19).

20. Baukasten nach mindestens einem der vorangegangenen Ansprüche,
**dadurch gekennzeichnet, dass**
das Gehäuse (15) des Stators A-seitig mit einem Lagerschild (1, 30, 63) verbindbar ist, das einen Lagersitz zur Aufnahme des A-seitigen Lagers der Rotorwelle (7) umfasst.

21. Baukasten nach mindestens einem der vorangegangenen Ansprüche,
**dadurch gekennzeichnet, dass**
das Lagerschild (1, 30, 63) Führungsvorrichtungen aufweist für die axiale Führung der Ankerscheibe der Bremse, insbesondere dass die Führungsvorrichtungen als Ausnehmungen ausgeführt sind.

22. Baukasten nach mindestens einem der vorangegangenen Ansprüche,
**dadurch gekennzeichnet, dass**
mindestens eine Verbindung dicht und lösbar ausgeführt ist, insbesondere alle Verbindungen dicht und lösbar ausgeführt sind.

## Claims

1. A construction kit of electric motors, comprising at least one stator, a rotor (9), a rotor shaft (7), a housing (15) for the stator and two bearing shields (1, 30, 63),
wherein the construction kit comprises different variants of electric motors, in particular within one structural size,
wherein the housing (15) has at least one first mechanical interface which is provided in order to connect to a bearing shield (1, 30, 63),
wherein the bearing shield (1, 30, 63) comprises at least one bearing seat for the bearing (10) of the rotor shaft (7) on the non-driving side,
wherein the housing (15) of the stator remains unchanged for all variants of electric motors,
**characterized in that**
the construction kit comprises different variants of bearing shields with different interfaces and
wherein at least two different bearing shields (1, 30, 63) are capable of being connected alternately to the housing (15) on the non-driving side,
wherein the bearing shield (1, 30, 63) of the first variant [comprises] a further interface for connexion to a base part (4) of a terminal box or alternatively to a base part which comprises an electronic power device, and wherein the bearing shield (1, 30, 63) of the first variant forms a housing for a brake and/or a fan (13),
wherein the base part (4) of the terminal box and the base part have an interface in each case for connexion to a cover (14, 31),
wherein the base part is connected by enlarged metallic contact faces in a thermally conductive manner to the bearing shield (1, 30, 63) so that the heat of the electronic power device is capable of being removed from the bearing shield (1, 30, 63) to the surrounding air, and
wherein the electronic power device is connected in a thermally conductive manner to the cover (25, 31) positioned on the base part (26, 91) for the removal of heat on a contact face provided for this purpose,
wherein the bearing shield (1, 30, 63) of the second variant is constructed in one piece with a further part, such as the base part (4) of the terminal box or the cover (25, 31).

2. A construction kit according to Claim 1, **characterized in that** a seal (16) is provided between the bearing shield (1, 30, 63) and the housing (15) associated with the stator.

3. A construction kit according to at least one of the preceding Claims, **characterized in that** the cover (25, 31) is connected in a thermally conductive manner to the bearing shield (1, 30, 63) by way of the base part (26, 91) in order to remove the heat of the electronic power device (24) to the surrounding environment.

4. A construction kit according to at least one of the preceding Claims, **characterized in that** the air flow of the fan (13) is provided at least for cooling the bearing shield (1, 30, 63).

5. A construction kit according to at least one of the preceding Claims, **characterized in that** the bearing shield (1, 30, 63) has recesses through which a cooling air flow is capable of being guided.

6. A construction kit according to at least one of the preceding Claims, **characterized in that** the bearing shield (1, 30, 63) is shaped in such a way that it is made suitable for guiding an air flow of a fan, in particular the air flow of that fan (13) for which the bearing shield (1, 30, 63) has the function of forming the housing.

7. A construction kit according to at least one of the preceding Claims, **characterized in that** the bearing shield (1, 30, 63) has attachment devices and/or centring devices for further appliances or devices capable of being arranged axially on the non-driving side.

8. A construction kit according to at least one of the preceding Claims, **characterized in that** the appliances or devices comprise at least one rotating component which is capable of being connected directly or indirectly to the rotor shaft (7) of the electric motor, and at least one non-rotating component which is capable of being connected to the bearing shield (1, 30, 63) and/or capable of being centred on the latter.

9. A construction kit according to at least one of the preceding Claims, **characterized in that** the appliances or devices are angle sensors (40), in particular high-resolution angle sensors.

10. A construction kit according to at least one of the preceding Claims, **characterized in that** the base part (26, 91) and the cover (25, 31) have the function of forming a housing for a sensor (40), wherein the sensor (40) is provided for detecting at least one physical property of a rotatably mounted part of the electric motor, in particular the fan blade (12).

11. A construction kit according to at least one of the preceding Claims, **characterized in that** a first electrical interface is associated with the first mechanical interface, and a second electrical interface is associated with a second mechanical interface.

12. A construction kit according to at least one of the preceding Claims, **characterized in that** the first and/or second electrical interface comprises a plug-in connexion (24).

13. A construction kit according to at least one of the preceding Claims, **characterized in that** a housing cover (25, 31) is connected to the base part (26, 91), the base part (4) of the terminal box or the bearing shield (1, 30, 63) with the one-piece base part (4) of the terminal box.

14. A construction kit according to at least one of the preceding Claims, **characterized in that** the base part (26, 91) or the base part (4) of the terminal box is capable of being connected to the bearing shield (1, 30, 63) in at least two different orientations, in particular in directions of orientation offset by 90° with respect to each other.

15. A construction kit according to at least one of the preceding Claims, **characterized in that** a soft-start electronic device is provided instead of an inverter electronic device.

16. A construction kit according to at least one of the preceding Claims, **characterized in that** at least the first bearing shield (1, 30, 63) has a finely machined contact face for connexion to the electronic power device (24) in a thermally conductive manner.

17. A construction kit according to at least one of the preceding Claims, **characterized in that** the electronic power device (24) is connected to the bearing shield (1, 30, 63) in a thermally conductive manner in order to remove heat to the surrounding environment.

18. A construction kit according to at least one of the preceding Claims, **characterized in that** the second bearing shield (1, 30, 63) is constructed with a sensor (40) which detects physical properties of the fan (13) or of a component connected to the latter on the periphery of the fan (13).

19. A construction kit according to at least one of the preceding Claims, **characterized in that** the first and second bearing shields (1, 30, 63) are capable of being connected in each case to a fan hood grille (19) of a similar type.

20. A construction kit according to at least one of the preceding Claims, **characterized in that** the housing (15) of the stator is capable of being connected on the driving side to a bearing shield (1, 30, 63) which comprises a bearing seat for receiving the bearing of the rotor shaft (7) on the driving side.

21. A construction kit according to at least one of the preceding Claims, **characterized in that** the bearing shield (1, 30, 63) has guiding devices for the axial guidance of the armature disc of the brake, and in particular the guiding devices are constructed in the form of recesses.

22. A construction kit according to at least one of the preceding Claims, **characterized in that** at least one connexion is made sealed tight and releasable, and in particular all the connexions are made sealed tight and releasable.

## Revendications

1. Kit de construction pour moteurs électriques, comprenant au moins un stator, un rotor (9), un arbre de rotor (7), un carter (15) pour le stator et deux flasques (1, 30, 63),
le kit de construction comprenant différentes variantes de moteurs électriques, en particulier à l'intérieur d'une taille de construction,
le carter (15) présentant au moins une première interface mécanique qui est prévue pour la liaison à un flasque (1, 30, 63),
le flasque (1, 30, 63) comprenant au moins un siège de palier pour le palier côté B (10) de l'arbre de rotor (7),
le carter (15) du stator restant inchangé pour toutes les variantes de moteurs électriques,
**caractérisé en ce que**
le kit de construction comprend différentes variantes de flasques avec différentes interfaces et
au moins deux flasques (1, 30, 63) différents pouvant être reliés au choix au carter (15) côté B,
le flasque (1, 30, 63) de la première variante comprenant une interface supplémentaire pour la liaison à une base de boîte à bornes (4) ou au choix à une base avec une électronique de puissance, et le flasque (1, 30, 63) de la première variante formant un carter pour un frein et/ou un ventilateur (13),
la base de boîte à bornes (4) et la base présentant chacune une interface pour la liaison à un couvercle (14, 31),
la base étant reliée au flasque (1, 30, 63) de façon thermoconductrice par des surfaces de contact métalliques agrandies afin que la chaleur de l'électronique de puissance puisse être évacuée dans l'air ambiant par le flasque (1, 30, 63) et
l'électronique de puissance étant, pour l'évacuation de chaleur, reliée de façon thermoconductrice au couvercle (25, 31) monté sur la base (26, 91), sur une surface de contact prévue à cet effet,
le flasque (1, 30, 63) de la deuxième variante étant réalisé d'une seule pièce avec une autre pièce comme la base de boîte à bornes (4) ou le couvercle (25, 31).

2. Kit de construction selon la revendication 1
**caractérisé en ce**
**qu'**il est prévu un joint (16) entre le flasque (1, 30, 63) et le carter (15) associé au stator.

3. Kit de construction selon au moins l'une des revendications précédentes,
**caractérisé en ce**
**que** le couvercle (25, 31) est reliée de façon thermoconductrice au flasque (1, 30, 63) par l'intermédiaire de la base (26, 91) pour évacuer dans l'environnement la chaleur de l'électronique de puissance (24).

4. Kit de construction selon au moins l'une des revendications précédentes,
**caractérisé en ce**
**que** le courant d'air du ventilateur (13) est prévu au moins pour refroidir le flasque (1, 30, 63).

5. Kit de construction selon au moins l'une des revendications précédentes,
**caractérisé en ce**
**que** le flasque (1, 30, 63) présente des évidements à travers lesquels le courant d'air de refroidissement peut être conduit.

6. Kit de construction selon au moins l'une des revendications précédentes,
**caractérisé en ce**
**que** le flasque (1, 30, 63) est formé de façon à pouvoir conduire l'air d'un courant d'air de ventilateur, en particulier du courant d'air du ventilateur (13) pour lequel le flasque (1, 30, 63) présente une fonction de formation de carter.

7. Kit de construction selon au moins l'une des revendications précédentes,
**caractérisé en ce**
**que** le flasque (1, 30, 63) présente des dispositifs de raccordement et/ou des dispositifs de centrage pour d'autres appareils ou dispositifs pouvant être disposés axialement côté B.

8. Kit de construction selon au moins l'une des revendications précédentes,
**caractérisé en ce**
**que** les appareils ou dispositifs comprennent au moins un composant tournant qui peut être relié directement ou indirectement à l'arbre de rotor (7) du moteur électrique, et au moins un composant non tournant qui peut être relié au flasque (1, 30, 63) et/ou centré sur celui-ci.

9. Kit de construction selon au moins l'une des revendications précédentes,
**caractérisé en ce**
**que** les appareils ou dispositifs sont des capteurs d'angle (40), en particulier des capteurs d'angle à résolution fine.

10. Kit de construction selon au moins l'une des revendications précédentes,
**caractérisé en ce**
**que** la base (26, 91) et le couvercle (25, 31) présentent une fonction de formation de carter pour un capteur (40), le capteur (40) étant prévu pour détecter au moins une propriété physique d'une pièce montée à rotation du moteur électrique, en particulier de l'ailette de ventilateur (12).

11. Kit de construction selon au moins l'une des revendications précédentes,
**caractérisé en ce**
**qu'**à la première interface mécanique est associée une première interface électrique et qu'à une deuxième interface mécanique est associée une deuxième interface électrique.

12. Kit de construction selon au moins l'une des revendications précédentes,
**caractérisé en ce**
**que** la première et/ou la deuxième interface électrique comprend une connexion enfichable (24).

13. Kit de construction selon au moins l'une des revendications précédentes,
**caractérisé en ce**
**qu'**un couvercle de carter (25, 31) est relié à la base (26, 91), la base de boîte à bornes (4) ou le flasque (1, 30, 63) avec base de boîte à bornes (4) en une seule pièce.

14. Kit de construction selon au moins l'une des revendications précédentes,
**caractérisé en ce**
**que** la base (26, 91) ou la base de boîte à bornes (4) peut être reliée sur le flasque (1, 30, 63) dans au moins deux orientations différentes, en particulier dans des directions d'orientation décalées de 90° l'une par rapport à l'autre.

15. Kit de construction selon au moins l'une des revendications précédentes,
**caractérisé en ce**
**qu'**une électronique de démarrage progressif est prévue à la place d'une électronique de variateur de vitesse.

16. Kit de construction selon au moins l'une des revendications précédentes,
**caractérisé en ce**
**qu'**au moins le premier flasque (1, 30, 63) présente une surface de contact usinée fin pour la liaison thermoconductrice avec l'électronique de puissance (24).

17. Kit de construction selon au moins l'une des revendications précédentes,
**caractérisé en ce**
**que** l'électronique de puissance (24) est reliée de façon thermoconductrice au flasque (1, 30, 63) pour évacuer la chaleur dans l'environnement.

18. Kit de construction selon au moins l'une des revendications précédentes,
**caractérisé en ce**
**que** le deuxième flasque (1, 30, 63) est réalisé avec un capteur (40) qui détecte à la périphérie du ventilateur (13) des propriétés physiques du ventilateur (13) ou d'un composant relié à celui-ci.

19. Kit de construction selon au moins l'une des revendications précédentes,
**caractérisé en ce**
**que** le premier et le deuxième flasque (1, 30, 63) peuvent être chacun reliés à une grille de capot de ventilateur (19) de même type.

20. Kit de construction selon au moins l'une des revendications précédentes,
**caractérisé en ce**
**que** le carter (15) du stator peut être relié côté A à un flasque (1, 30, 63) qui comprend un siège de palier destiné à recevoir le palier côté A de l'arbre de rotor (7).

21. Kit de construction selon au moins l'une des revendications précédentes,
**caractérisé en ce**
**que** le flasque (1, 30, 63) présente des dispositifs de guidage pour le guidage axial du disque d'induit du frein, en particulier que les dispositifs de guidage sont réalisés sous forme d'évidements.

22. Kit de construction selon au moins l'une des revendications précédentes,
**caractérisé en ce**
**qu'**au moins une liaison est réalisée de manière étanche et détachable, en particulier toutes les liaisons sont réalisées de manière étanche et détachable.
